# EUROPÄISCHE PATENTSCHRIFT

(11) **EP 2 388 875 B1**
(45) Veröffentlichungstag und Bekanntmachung des Hinweises auf die Patenterteilung: **27.03.2013**
(21) Anmeldenummer: 11003047.5
(22) Anmeldetag: 12.04.2011
(51) Int. Cl.: H02G 3/18, H02G 9/10, E05C 5/04

(54) **Verschlusseinrichtung für den Deckel eines Unterflur-Schachtes**
Locking device for the cover of a subsurface shaft
Dispositif de fermeture pour le couvercle d'une boîte souterraine

(30) Priorität: 22.05.2010 DE 102010021295
(43) Veröffentlichungstag der Anmeldung: 23.11.2011
(73) Patentinhaber: Langmatz GmbH, 82467 Garmisch-Partenkirchen (DE)
(72) Erfinder: Capka, Rainer, 82444 Schlehdorf (DE)
(74) Vertreter: Flosdorff, Jürgen

(56) Entgegenhaltungen:
- DE-A1- 3 318 854
- DE-U1- 29 712 728
- US-B1- 6 265 662

## Beschreibung

Die Erfindung betrifft eine Verschlusseinrichtung für den Deckel eines Unterflur-Schachtes, insbesondere für die Energieverteilung und/oder die Telekommunikation, wobei der Deckel an einer Seite schwenkbar an dem Schacht angebracht und an der gegenüberliegenden Seite mittels der Verschlusseinrichtung lösbar an dem Schacht befestigbar ist, wie zum Beispiel in DE 297 12728 U1.

Üblicherweise ist für die Verriegelung eines Deckels eines Schachtes ein Drehriegel vorgesehen, der mittels eines Werkzeugs in die Verriegelungsstellung gedreht wird, in der der Riegel z.B. in eine Tasche der Schachtwand oder des oberen Schachtrahmens eingreift. Eine derartige Verriegelung des Schachtdeckels hat Nachteile. Der Deckel eines Schachtes, der üblicherweise aus Gusseisen oder größtenteils aus Beton besteht oder ausgepflastert ist, ist schwer, so dass er beim Verschwenken in die Verschluss-Stellung des Schachtes auf den oberen Rand der Schachtwand bzw. des Schachtrahmens hart aufschlagen kann, wodurch der Deckel und/oder die Schachtwand auf die Dauer beschädigt werden kann/können. Wenn sich in dem umlaufenden Spalt zwischen dem Deckel und dem Schachtrahmen Schmutzpartikel oder Wasser ansammeln und das Wasser im Winter zu Eis gefriert, kann es sehr mühsam und schwierig sein, den Deckel in die Öffnungsstellung des Schachtes hoch zu schwenken.

Der vorliegenden Erfindung liegt die Aufgabe zugrunde, eine Verschlusseinrichtung für den Deckel eines Unterflur-Schachtes anzugeben, bei dem die obigen Nachteile vermieden sind.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Verschlusseinrichtung ein Gewindeteil, das einen Bolzen mit einem daran angesetzten Schneckengewinde aufweist, und eine Schraubenfeder enthält, und dass das Gewindeteil drehbar an der Unterseite des Deckels gehalten ist, während die Schraubenfeder nicht-drehbar an dem Schacht befestigt ist, wobei in der Verschluss-Stellung des Deckels die Längsachse des Gewindeteils mit der Längsachse der Schraubenfeder übereinstimmt. Der Außendurchmesser des Bolzens ist kleiner als der Innendurchmesser der Schraubenfeder, während der Außendurchmesser des Schneckengewindes größer ist als der Innendurchmesser der Schraubenfeder, und die Gewindesteigung des Schneckengewindes stimmt im wesentlichen mit der Gewindesteigung der Schraubenfeder überein. Ferner sieht die Erfindung vor, dass die Schraubenfeder eine solche Länge bzw. Höhe hat, dass das Schneckengewinde auf die Schraubenfeder auftrifft, bevor der Deckel die endgültige Verschluss-Stellung erreicht.

Bei dieser Ausbildung trifft demnach beim Verschwenken des Deckels in die Schließstellung des Schachtes das Gewindeteil mit seinem Schneckengewinde auf die Oberseite der Schraubenfeder auf, die dabei als Dämpfungsmittel wirkt und elastisch nachgibt, so dass ein Aufprall des Deckels auf den Schacht vermieden wird. Das Gewindeteil wird dann mittels eines Werkzeugs in die Schraubenfeder eingeschraubt, wodurch der Deckel in die Verschluss-Stellung bewegt wird, in der er an einem Anschlag des Schachtes anliegt.

Zum Öffnen des Deckels wird das Gewindeteil in umgekehrter Richtung gedreht, wobei sich das Schneckengewinde an der Schraubenfeder nach oben abdrückt und den Deckel langsam anhebt, bis das Schneckengewinde aus der Schraubenfeder austritt. Dies erfolgt auch dann zuverlässig, wenn der Spalt zwischen dem Deckel und dem umgebenden Schachtrand mit Schmutz oder Eis zugesetzt ist.

Die Schraubenfeder besteht zweckmäßigerweise aus Federstahl, während das Gewindeteil beispielsweise aus Messing bestehen kann. Damit ist die Verschlusseinrichtung so stabil, dass sie allen einwirkenden Kräften dauerhaft Stand hält.

Der Bolzen des Gewindeteils steht an seinem freien Ende über das Schneckengewinde hinaus vor und läuft zweckmäßigerweise spitz, beispielsweise konisch, zu. Damit greift der Bolzen des Gewindeteils beim Verschwenken des Deckels in die Schließstellung zuverlässig in den Innenraum der Schraubenfeder ein, so dass das Schneckengewinde, das zu seinem freien Ende hin offen ausläuft, durch Drehen des Gewindeteils in die Windungen der Schraubenfeder eingreift.

Zweckmäßigerweise ist der Außendurchmesser des Schneckengewindes ein wenig größer als der Außendurchmesser der Schraubenfeder.

Wichtig ist, dass die Schraubenfeder nicht-drehbar an dem Schacht bzw. dem oberen Schachtrahmen befestigt ist. Hierzu kann das obere Ende der Schraubenfeder in einem Loch eines Wandabschnitts gehalten sein, der sich neben der Schraubenfeder erstreckt und an der Schachtwand bzw. dem Schachtrahmen befestigt ist.

In weiterer Ausgestaltung der Erfindung ist vorgesehen, dass das Gewindeteil, das sich an der Unterseite des Deckels befindet, mit einem von der Oberseite des Deckels aus zugänglichen drehbaren Betätigungselement gekoppelt ist, das einen Aufnahmekopf für ein Werkzeug hat. Dieser Aufnahmekopf kann beispielsweise eine Sechseck-Bohrung haben, in die als Werkzeug ein entsprechender Schlüssel einsetzbar ist. Das Betätigungselement verläuft dabei durch ein Loch in der Bodenwand des Deckels und ist unterhalb der Bodenwand drehfest mit dem Bolzen verbunden.

Das drehbare Betätigungselement des Gewindeteils ist zweckmäßigerweise in einem Gehäuseteil des Deckels untergebracht, das eine zu öffnende Abdeckung aufweist. Die Abdeckung verhindert, dass sich Schmutzpartikel an dem drehbaren Betätigungselement festsetzen und dessen Funktionsfähigkeit beeinträchtigen können.

Die erfindungsgemäße Verschlusseinrichtung eines Deckels ist nicht nur für Unterflur-Schächte geeignet, sondern sie ist beispielsweise auch als Verschlusseinrichtung für schwere Klappen, Türen und dergleichen und für Deckel anderer Einrichtungen geeignet.

Weitere Einzelheiten der Erfindung ergeben sich aus der nachfolgenden Beschreibung einer bevorzugten Ausführungsform einer Verschlusseinrichtung eines Deckels eines Unterflur-Schachtes. Dabei zeigen:
- Figur 1: einen Längsschnitt durch den Deckel und den oberen Randbereich eines Schachtes in der Verschluss-Stellung;

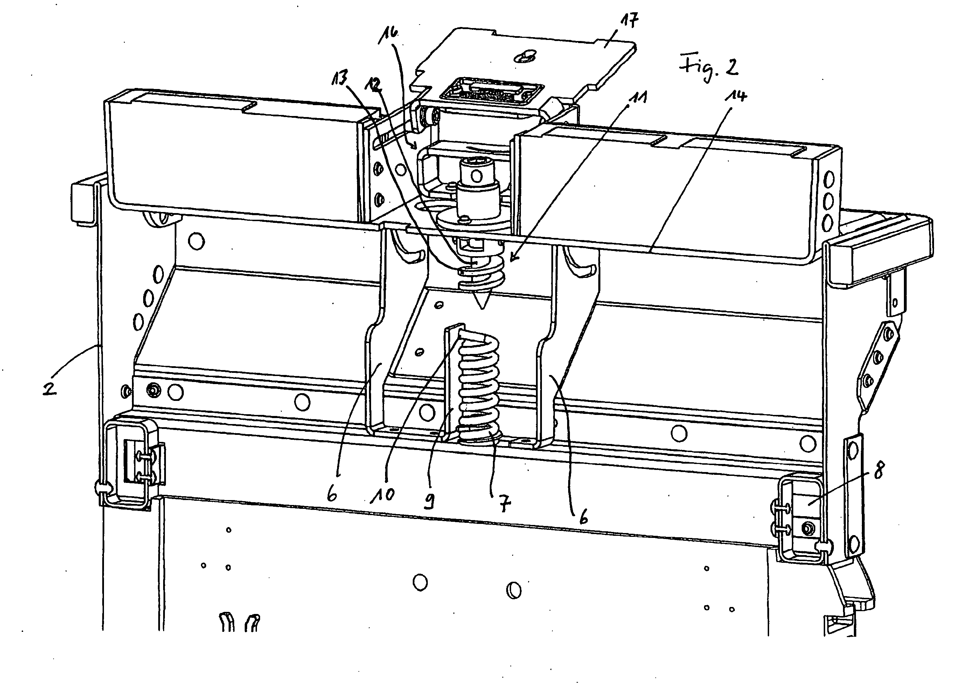

- Figur 2: eine teilweise geschnittene Vorderansicht des oberen Bereichs des Deckels und des Schachtes mit leicht angehobenen Deckel;

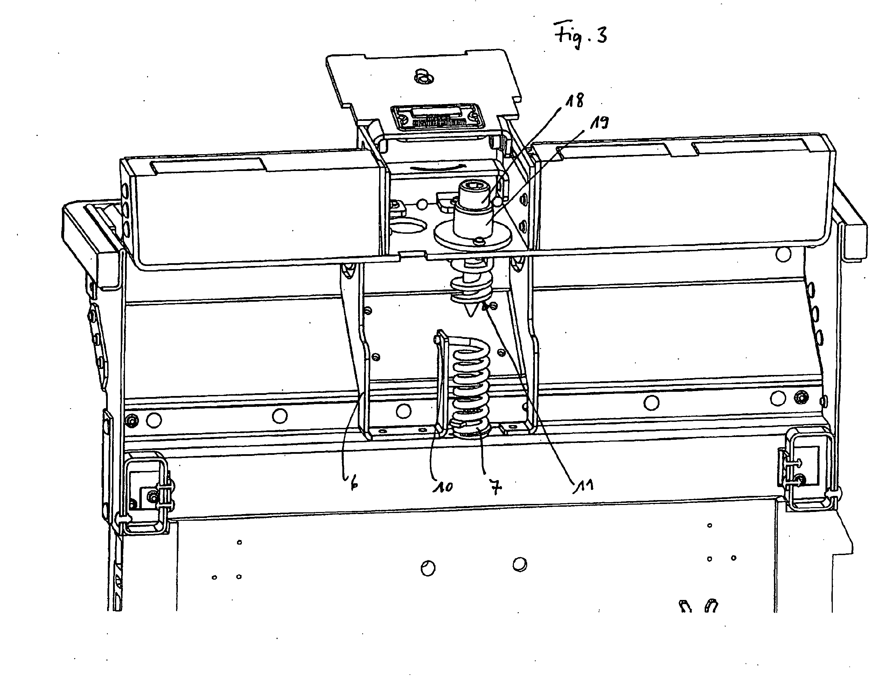

- Figur 3: eine Darstellung ähnlich Figur 2, in anderer Perspektive;

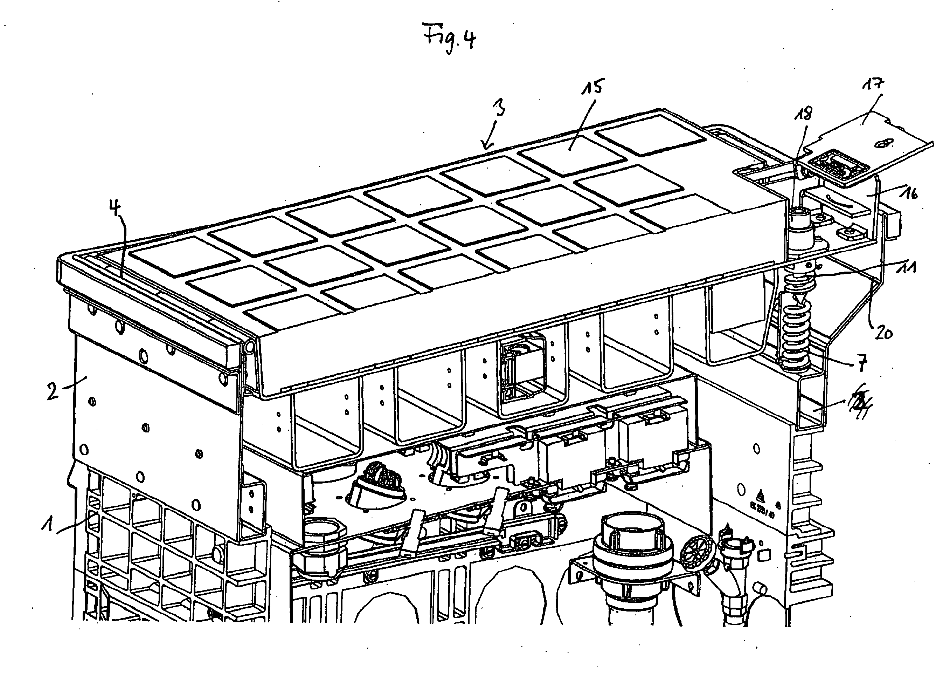

- Figur 4: eine Darstellung mit leicht angehobenem Deckel in seitlicher Perspektive;

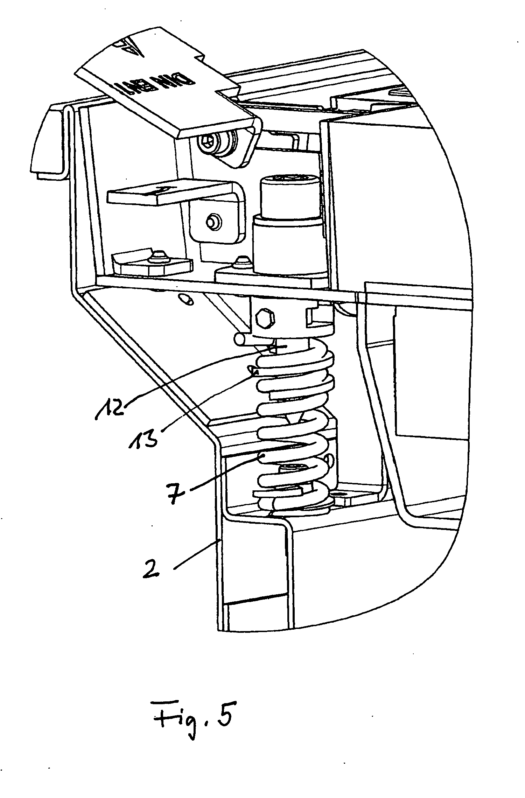

- Figur 5: eine vergrößerte Darstellung der Verschluss-Stellung der Verschlusseinrichtung und
- Figur 6: einen Vertikalschnitt durch die Verschlusseinrichtung gemäß Figur 5.

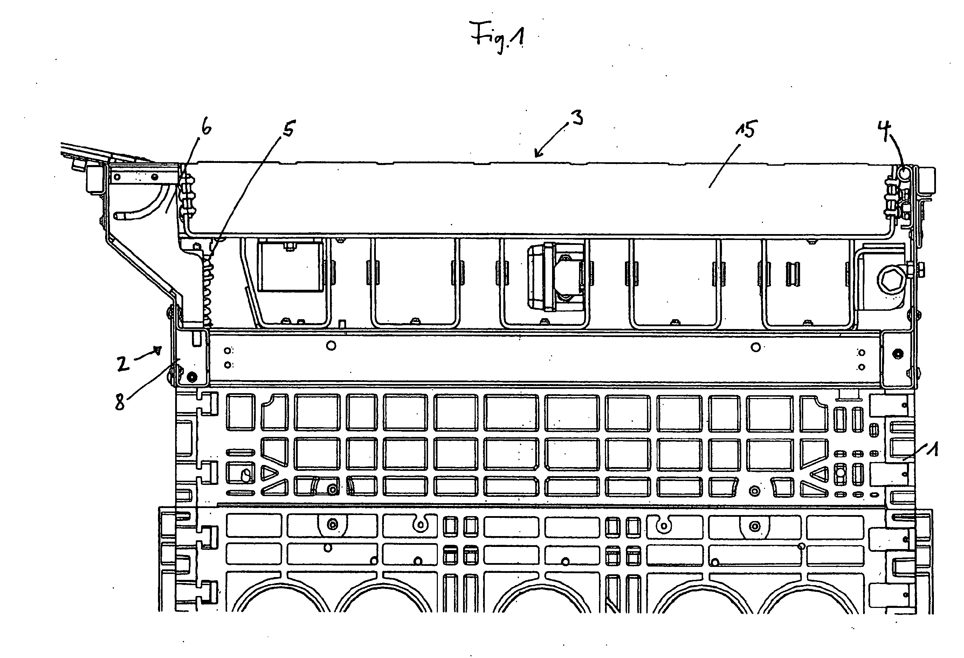

Figur 1 zeigt den oberen Bereich eines aus Kunststoff bestehenden Schachtes 1, dessen oberer Endabschnitt durch einen aus Metall bestehenden Schachtrahmen 2 gebildet ist. Ein Schachtdeckel 3 ist an einer Seite mittels Scharniere 4 schwenkbar an dem Schachtrahmen 2 angelenkt. An der gegenüberliegenden Seite befindet sich eine insgesamt mit dem Bezugszeichen 5 bezeichnete Verschlusseinrichtung für den Deckel 3, die in Figur 1 teilweise durch eine Seitenwand 6 überdeckt ist.

Die Verschlusseinrichtung 5 besteht aus einer Schraubenfeder 7, die in senkrechter Ausrichtung auf einem Hohlprofil 8 des Schachtrahmens 2 befestigt ist. Dicht neben der Schraubenfeder 7 befindet sich ein senkrecht abgewinkelter Wandabschnitt 9, der sich von der Wand 6 erstreckt. Der Wandabschnitt 9 hat in seinem oberen Endbereich ein Loch 10, durch das der freie Endabschnitt der Schraubenfeder 7 verläuft, wodurch die Schraubenfeder 7 nicht-drehbar fixiert ist.

Die Verschlusseinrichtung 5 enthält ferner ein Gewindeteil 11, das aus einem spitz zulaufenden Bolzen 12 mit daran angesetztem Schneckengewinde 13 besteht. Der Außendurchmesser des Bolzens 12 ist kleiner als der Innendurchmesser der Schraubenfeder 7, während der Außendurchmesser des Schneckengewindes 13 etwa mit dem Außendurchmesser der Schraubenfeder 7 übereinstimmt oder etwas größer als dieser ist. Die Gewindesteigung der Schraubenfeder 7 stimmt im wesentlichen mit der Gewindesteigung des Schneckengewindes 13 überein. Die Schraubenfeder 7 besteht aus Federstahl, während das Gewindeteil 11 vorzugsweise aus Messing oder einem anderen Metall besteht.

Das Gewindeteil 11 ist unter der Bodenwand 14 des Deckels 3 drehbar gehalten, dessen wannenförmiger oberer Teil mit Beton 15 gefüllt oder ausgepflastert ist.

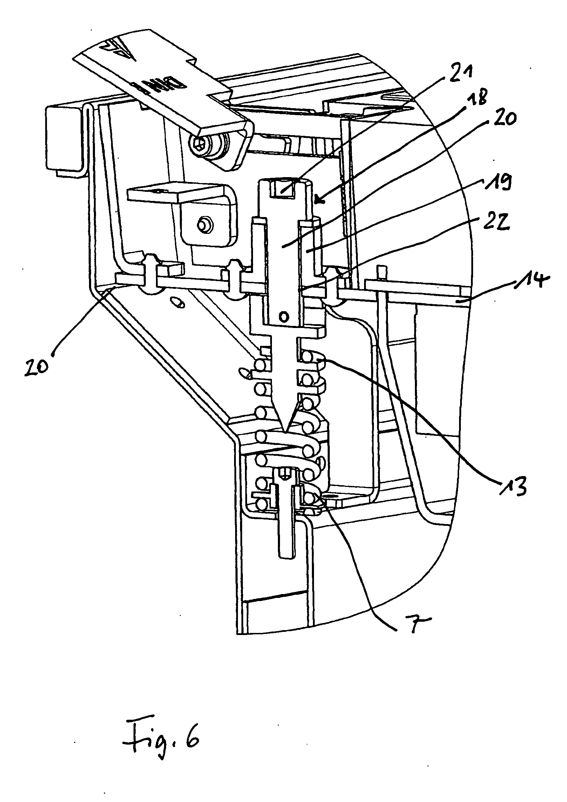

In einem abgetrennten Gehäuseteil 16 des Deckels 3, der von einer aufklappbaren Abdeckung 17 überdeckt ist, befindet sich ein Betätigungselement 18, mit dem das Gewindeteil 11 von der Oberseite des Deckels 3 aus drehbar ist. Das Betätigungselement 18 enthält einen drehbar in einer Hülse 19 gehaltenen Bolzen 20, dessen Kopf eine Sechskant-Aussparung 21 hat, in den ein Werkzeug zum Drehen des Bolzens 20 einsetzbar ist. Der Bolzen 20 durchgreift ein Loch 22 in der Bodenwand 14 des Deckels 3 und ist unterhalb der Bodenwand 14 mit dem Gewindeteil 11 drehfest verbunden. Figur 6 zeigt, dass der Außendurchmesser des Schneckengewindes 13 etwas größer ist als der Außendurchmesser der Schraubenfeder 7.

Figur 6 zeigt außerdem, dass der Deckel 3 in seiner Verschluss-Stellung auf einer Randkante 20 des Schachtrahmens 2 aufliegt. Die Randkante 20 bildet den Anschlag für den Deckel. Die Schraubenfeder 7 erstreckt sich in eine solche Höhe, dass das freie Ende des Schneckengewindes 13 auf die Oberseite der Schraubenfeder 7 auftrifft, wenn der Deckel 3 noch von seiner Endstellung bzw. dem Anschlag 20 entfernt ist. Durch Einschrauben des Gewindeteils 11 in die Schraubenfeder 7 wird der Deckel herunter gezogen, bis die Bodenwand des Deckels 3 den Anschlag 20 erreicht.

## Patentansprüche

1. Verschlusseinrichtung für einen Deckel (3) eines Unterflur-Schachtes, wobei der Deckel (3) an einer Seite schwenkbar an dem Schachtrahmen (2)angebracht und an der gegenüberliegenden Seite mittels der Verschlusseinrichtung (5) lösbar an dem Schachtrahmen (2) befestigbar ist,
**dadurch gekennzeichnet,**
**dass** die Verschlusseinrichtung ein Gewindeteil (11), das einen Bolzen (12) mit einem daran angesetzten Schneckengewinde (13) aufweist, und eine Schraubenfeder (7) enthält,
**dass** das Gewindeteil (11) drehbar an der Unterseite des Deckels (3) gehalten ist,
**dass** die Schraubenfeder (7) nicht-drehbar an dem Schachtrahmen (2) befestigt ist, wobei in der Verschluss-Stellung des Deckels (3) die Längsachse des Gewindeteils (11) mit der Längsachse der Schraubenfeder (7) übereinstimmt,
**dass** der Außendurchmesser des Bolzens (12) kleiner ist als der Innendurchmesser der Schraubenfeder (7),
**dass** der Außendurchmesser des Schneckengewindes (13) größer ist als der Innendurchmesser der Schraubenfeder (7),
**dass** die Gewindesteigung des Schneckengewindes (13) im wesentliche mit der Gewindesteigung der Schraubenfeder (7) übereinstimmt, und
**dass** die Schraubenfeder (7) eine solche Länge hat, dass das Schneckengewinde (13) des Gewindeteils (11) auf die Schraubenfeder (7) auftrifft, bevor der Deckel (3) einen Anschlag (20) für die Verschluss-Stellung erreicht.

2. Verschlusseinrichtung nach Anspruch 1,
**dadurch gekennzeichnet,**
**dass** der Bolzen (12) an seinem freien Ende das Schneckengewinde (13) überragt.

3. Verschlusseinrichtung nach Anspruch 2,
**dadurch gekennzeichnet,**
**dass** das freie Ende des Bolzens (12) spitz zuläuft.

4. Verschlusseinrichtung nach einem der Ansprüche 1 bis 3,
**dadurch gekennzeichnet,**
**dass** das Schneckengewinde (13) zu seinem freien Ende hin offen ausläuft.

5. Verschlusseinrichtung nach einem der Ansprüche 1 bis 4,
**dadurch gekennzeichnet,**
**dass** der Außendurchmesser des Schneckengewindes (13) größer als der Außendurchmesser der Schraubenfeder (7) ist.

6. Verschlusseinrichtung nach einem der Ansprüche 1 bis 5,
**dadurch gekennzeichnet,**
**dass** das Gewindeteil (11) mit einem von der Oberseite des Deckels (3) aus zugänglichen drehbaren Betätigungselement (18) gekoppelt ist, das einen Aufnahmekopf (20) für ein Werkzeug hat.

7. Verschlusseinrichtung nach Anspruch 6,
**dadurch gekennzeichnet,**
**dass** das drehbare Betätigungselement (18) in einem Gehäuseteil (16) des Deckels (3) untergebracht ist, das eine zu öffnende Abdeckung (17) aufweist.

## Claims

1. A locking device for a cover (3) of a subsurface shaft, wherein the cover (3) is pivotally connected on one side to the shaft frame (2) and is securable to the shaft frame (2) on the opposite side by means of the locking device (5), **characterised in that** the locking device includes a threaded portion (11), which has a peg (12) with a screw thread (13) formed on it, and a helical spring (7), that the threaded portion (11) is rotatable retained on the underside of the cover (3), that the helical spring (7) is non-rotatably secured to the shaft frame (2), wherein, in the locked position of the cover (3), the longitudinal axis of the threaded portion (11) coincides with the longitudinal axis of the helical spring (7), that the external diameter of the peg (12) is smaller than the internal diameter of the helical spring (7), that the external diameter of the screw thread (13) is greater than the internal diameter of the helical spring (7), that the thread pitch of the helical thread (13) is substantially the same as the thread pitch of the helical spring (7), and that the helical spring (7) has such a length that the screw thread (13) of the threaded portion (11) impinges on the helical spring (7) before the cover (3) reaches an abutment (20) for the locked position.

2. A locking device as claimed in claim 1, **characterised in that** the free end of the peg (12) extends beyond the screw thread (13).

3. A locking device as claimed in claim 2, **characterised in that** the free end of the peg (12) is tapered.

4. A locking device as claimed in one of claims 1 to 3, **characterised in that** the screw thread (13) terminates open at its free end.

5. A locking device as claimed in one of claims 1 to 4, **characterised in that** the external diameter of the screw thread (13) is greater than the external diameter of the helical spring (7).

6. A locking device as claimed in one of claims 1 to 5, **characterised in that** the threaded portion (11) is coupled to a rotatable actuating element (18), which is accessible from the upper side of the cover (3) and has a receiving head (20) for a tool.

7. A locking device as claimed in claim 6, **characterised in that** the rotatable actuating element (18) is accommodated in a housing portion (16) of the cover (3), which has a cover plate (17), which may be opened.

## Revendications

1. Dispositif de fermeture pour un couvercle (3) d'une boîte souterraine, sachant que le couvercle (3) est installé au niveau du cadre de regard (2) de manière à pouvoir pivoter au niveau d'un côté et peut être fixé de manière amovible au niveau du cadre de regard (2) sur le côté opposé au moyen du dispositif de fermeture (5),
**caractérisé en ce**
**que** le dispositif de fermeture comporte une partie filetée (11), qui présente un boulon (12) doté d'un filetage de vis (13) et qui comporte un ressort à boudin (7),
**que** la partie filetée (11) est maintenue de manière à pouvoir tourner au niveau du côté inférieur du couvercle (3),
**que** le ressort à boudin (7) est fixé de manière à ne pas pouvoir tourner au niveau du cadre de regard (2), sachant que lorsque le couvercle (3) est en position fermée, l'axe longitudinal de la partie filetée (11) correspond à l'axe longitudinal du ressort à boudin (7),
**que** le diamètre extérieur du boulon (12) est plus petit que le diamètre intérieur du ressort à boudin (7),
**que** le diamètre extérieur du filetage de vis (13) est plus grand que le diamètre intérieur du ressort à boudin (7),
**que** le pas de filetage du filetage de vis (13) correspond essentiellement au pas de filetage du ressort à boudin (7), et
**que** le ressort à boudin (7) présente une telle longueur que le filetage de vis (13) de la partie filetée (11) rencontre le ressort à boudin (7) avant que le couvercle (3) n'atteigne une butée (20) destinée à la position fermée.

2. Dispositif de fermeture selon la revendication 1,
**caractérisé en ce**
**que** le boulon (12) dépasse au niveau de son extrémité libre le filetage de vis (13).

3. Dispositif de fermeture selon la revendication 2,
**caractérisé en ce**
**que** l'extrémité libre du boulon (12) est pointue.

4. Dispositif de fermeture selon l'une quelconque des revendications 1 à 3,
**caractérisé en ce**
**que** le filetage de vis (13) s'étend de manière ouverte en direction de son extrémité libre.

5. Dispositif de fermeture selon l'une quelconque des revendications 1 à 4,
**caractérisé en ce**
**que** le diamètre extérieur du filetage de vis (13) est plus grand que le diamètre extérieur du ressort à boudin (7).

6. Dispositif de fermeture selon l'une quelconque des revendications 1 à 5,
**caractérisé en ce**
**que** la partie filetée (11) est couplée à un élément d'actionnement (18) pouvant tourner et accessible depuis le côté supérieur du couvercle (3), lequel élément d'actionnement comprend une tête de réception (20) pour un outil.

7. Dispositif de fermeture selon la revendication 6,
**caractérisé en ce**
**que** l'élément d'actionnement (18) pouvant tourner est logé dans une partie de boîtier (16) du couvercle (3), lequel présente un élément de recouvrement (17) devant être ouvert.
